Europäisches Patentamt

European Patent Office

Office européen des brevets

(11) Numéro de publication : **0 019 500**
**B1**

(12) **FASCICULE DE BREVET EUROPÉEN**

(45) Date de publication du fascicule du brevet :
16.02.83

(21) Numéro de dépôt : **80400503.1**

(22) Date de dépôt : **15.04.80**

(51) Int. Cl.³ : **G 02 B   5/16, H 01 B 13/06,**
**B 29 C 17/10**

(54) **Poste d'usinage en continu de rainures dans un support de câble à fibres optiques et utilisation d'un tel poste.**

(30) Priorité : 15.05.79 FR 7912282

(43) Date de publication de la demande :
26.11.80 Bulletin 80/24

(45) Mention de la délivrance du brevet :
16.02.83 Bulletin 83/07

(84) Etats contractants désignés :
BE CH DE GB IT LI NL

(56) Documents cités :
DE B 2 651 725
FR A 1 350 724
FR A 1 476 393
FR A 2 052 016
GB A 1 168 020

(73) Titulaire : **LIGNES TELEGRAPHIQUES ET TELEPHO-
NIQUES L.T.T.**
**1, rue Charles Bourseul**
**F-78702 Conflans Ste Honorine (FR)**

(72) Inventeur : **Hulin, Jean-Pierre**
**"THOMSON-CSF" - SCPI 173, Bld Haussmann**
**F-75360 Paris Cedex 08 (FR)**
Inventeur : **Dubois, Gilles**
**"THOMSON-CSF" - SCPI 173, Bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

Poste d'usinage en continu de rainures dans un support de câble à fibres optiques et utilisation d'un tel poste

La présente invention concerne les machines de fabrication de câbles élémentaires constitués par un support rigide diélectrique présentant des gorges ou rainures dans lesquelles sont placées des fibres optiques protégées par un rubanage ultérieur. Un élément de câble à fibres optiques de ce type est décrit dans la demande de brevet français publiée le 15 septembre 1978 sous le n° 2.381.326, pour : « Elément de câble incorporant des fibres optiques ».

La demande de brevet français publiée le 3 août 1979 sous le n° 2.413.962, pour : « Procédé d'usinage en continu de support pour guides d'ondes électromagnétiques » et sa première addition publiée le 11 janvier 1980 sous le n° 2.428.513, décrivent un procédé d'usinage en continu de rainures, hélicoïdales ou à pas alterné, dans un jonc diélectrique en vue de réaliser notamment le support des fibres optiques d'un élément de câble à fibres optiques. La demande de brevet français publiée le 28 septembre 1979 sous le n° 2.418.940, pour : « Perfectionnements à la fabrication d'éléments de câblage comportant des fibres optiques » décrit un dispositif susceptible d'assurer la pose simultanée en continu de l'ensemble des fibres optiques dans les rainures d'un support cylindrique préalablement usiné. La mise en tandem de ces deux postes (usinage et pose) dans une ligne de production en continu d'éléments de câble présente des difficultés en cours d'exploitation résultant notamment des interruptions inévitables et se présentant plus particulièrement à la mise en route de la ligne de production. En effet, ainsi qu'il est expliqué dans la demande de brevet français publiée le 3 août 1979 sous le n° 2.413.962, pour : « Procédé d'usinage en continu de support pour guides d'ondes électromagnétiques », l'usinage des rainures se fait à chaud, à une température dépendant de la nature du matériau constituant le support, température qui est de l'ordre de 200 °C dans le cas du polyéthylène à moyenne densité. Un arrêt, accidentel ou non, du poste d'usinage entraîne l'immobilisation du support et une surchauffe locale de la zone qui se trouve au voisinage de l'outil, par suite de l'inertie thermique de celui-ci. La reprise de l'usinage ne peut donc être effectuée par simple remise en route du poste d'usinage, une certaine longueur de support ayant été endommagée par la surchauffe subie. Il n'est donc pas possible d'incorporer le poste d'usinage tel que décrit dans la demande ci-dessus dans une ligne de fabrication qui doit nécessairement pouvoir être arrêtée et remise en route sans dommage pour les éléments constituant le câble.

On connaît également d'autres techniques permettant d'usiner des rainures, par exemple hélicoïdales, dans un support cylindrique. On se reportera par exemple au brevet français n° 1.476.393 délivré le 27 février 1967, pour : « Appareil et procédé pour former un filet hélicoïdal dans la surface d'un cylindre allongé en matière thermoplastique ». Selon ce brevet, chaque rainure est formée à l'aide d'un soc chauffable dont la pointe pénètre par fusion dans la matière thermoplastique à l'état ramolli. On citera également le brevet français n° 1.350.724 délivré le 23 décembre 1963, pour : « Perfectionnements aux quartes et procédé de fabrication », selon lequel les rainures sont formées par fraisage au moyen d'un ensemble de fraises disposées de façon à permettre la fabrication en continu et en une seule opération de la quarte.

La présente invention a pour objet un poste d'usinage en continu de rainures dans un support cylindrique en matière plastique susceptible d'être introduit dans une ligne de fabrication d'éléments de câble à fibres optiques, c'est-à-dire permettant d'effectuer, en ligne, les opérations d'usinage des rainures dans le support, de pose des fibres dans les rainures et de pose des protection et enveloppe.

Selon l'une des caractéristiques essentielles de l'invention, le poste d'usinage de rainures comporte un ensemble de dents radiales en nombre égal à celui des rainures à former, associé à une monture annulaire et à une couronne coaxiale mobile par rapport à la monture, la rotation relative de la couronne par rapport à la monture assurant un déplacement radial des dents et permettant un positionnement indépendant de chacune des dents ; le poste comporte également des moyens permettant un déplacement en translation de la monture parallèlement au défilement du support de fibre.

En position de marche normale, le poste d'usinage est disposé le plus près possible de la tête de pose des fibres. De préférence, un dispositif d'aspiration des copeaux est disposé en amont du poste d'usinage et associé à celui-ci. La tête de pose des fibres est, de préférence, du type décrit dans la demande de brevet français n° 2.418.940 déjà citée, et elle est asservie au poste d'usinage des rainures.

Selon un aspect de l'invention, chacune des dents comprend son propre élément de chauffage, placé au voisinage de la zone coupante, et un capteur thermosensible qui alimente un circuit de commande de la température de ladite dent.

Selon un mode de réalisation particulier de l'invention, le profil de la pointe coupante des dents est un triangle curviligne.

Selon une forme d'exécution de l'invention, la couronne occupe une gorge pratiquée dans la monture annulaire, et porte des dispositifs de blocage des dents placés dans des logements individuels de ladite couronne.

Le poste selon l'invention a pour avantage une grande souplesse de fonctionnement. En cas d'arrêt du poste, les dents sont escamotées radialement ; l'usinage des rainures est arrêté sans blessure du support diélectrique. Le retrait des dents supprime toute surchauffe. L'asservissement en température de chacune des dents permet un réglage précis des conditions de coupe et améliore l'état de surface des rainures. Le déplacement longitudinal de la tête d'usinage permet de reprendre l'usinage de l'élément en conservant les caractéristiques géométriques et l'état de surface des rainures. Avant la remise en route de la ligne de fabrication, la tête d'usinage ayant été déplacée en aval de la position de fonctionnement, les dents se positionnent progressivement spontanément dans les rainures à mesure que l'ensemble d'usinage reprend sa position de fonctionnement. La remise en route de la ligne assure la continuité des rainures.

Le déplacement radial des dents permet de contrôler la profondeur de coupe et facilite le réglage de la coupe pour un profil de dent donné.

L'utilisation des dents démontables facilite leur réalisation par des moyens classiques d'usinage et permet d'obtenir une meilleure définition géométrique de la partie coupante et des tolérances plus faibles.

L'invention sera bien comprise en se reportant à la description suivante et aux figures qui l'accompagnent dans lesquelles :

la figure 1 est une vue générale d'une ligne de fabrication comprenant un poste d'usinage selon l'invention ;

la figure 2 est une vue de face d'une réalisation de l'outil d'usinage ;

les figures 3 sont une vue en perspective d'une dent de coupe montée et d'une dent séparée de l'outil ;

les figures 4 représentent en section des variantes des pointes de dents ;

les figures 5 sont des vues en coupe de la tête d'usinage en position de travail et de repos ;

les figures 6 expliquent le déplacement radial des dents.

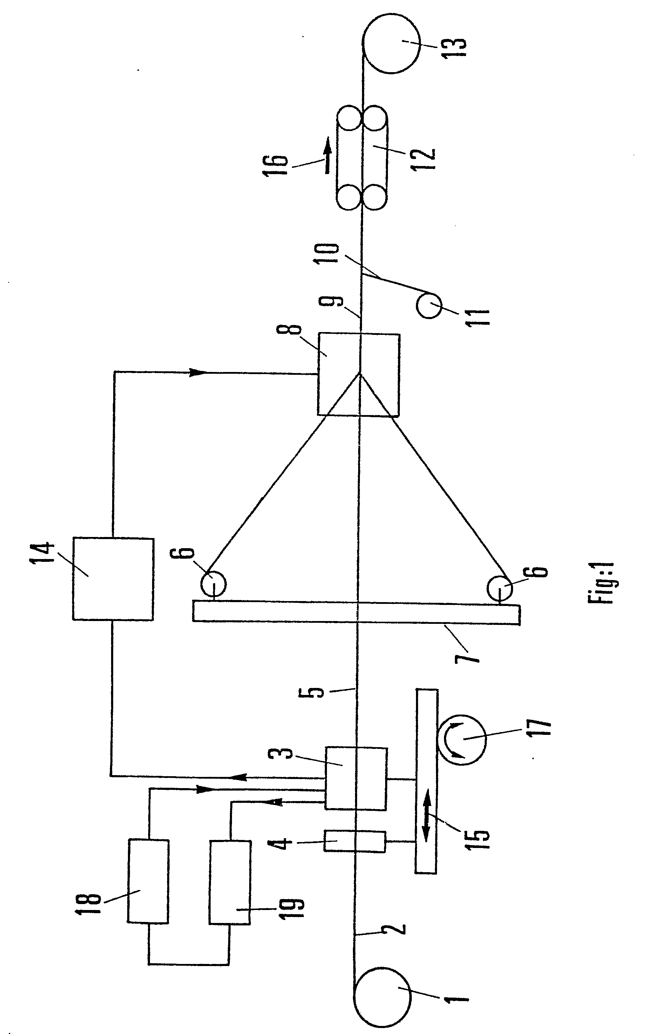

On a représenté sur la figure 1 une réserve 1 de support diélectrique lisse 2 transformé en support rainuré au poste d'usinage 3 associé au poste d'éliminatin des copeaux 4. Le support rainuré 5 reçoit les fibres optiques fournies par des réserves 6 disposées sur un plateau 7 solidaire d'une tête de pose 8.

Le support rainuré muni de fibres optiques 9 est entouré d'un ruban 10 de protection fourni par une rubaneuse 11. On a représenté en 12 un dispositif de tirage et en 13 une réception servant de réserve de l'élément de câble. Suivant les besoins, dans le cas de rainures hélicoïdales, on peut disposer d'un départ 1, d'un tirage 12 et d'une réception 13 tournants, les autres éléments de la ligne étant fixes. En variante préférée, on réalise un poste d'usinage 3-4 et un poste de pose, de fibres 8-7 tournants, les autres éléments de la ligne restant fixes. On a représenté en 14 un dispositif d'asservissement utilisé dans cette deuxième variante pour assurer la synchronisation du poste de pose 8 à partir du poste d'usinage 3. L'usinage de rainures à pas alterné se fait de façon analogue.

Selon un aspect de l'invention, le poste d'usinage 3-4 est monté sur une table 15 mobile en translation, suivant la direction 16 de défilement du câble, sous l'action d'un moteur 17. L'usinage se faisant à chaud, on a représenté en 18 une source portant le poste d'usinage 3 à la température optimale, compte tenu notamment de la vitesse de défilement, du matériau du support 2. Le poste d'usinage 3 comporte un capteur de température délivrant un signal utilisé en 19 à la régulation de la source 18. De la sorte, la ligne peut être entièrement automatisée. Les postes 1, 11, 12 et 13 sont des éléments standards commercialement disponibles. L'ensemble de pose des fibres 6-7-8 est du type décrit dans la demande de brevet français n° 2.418.940 déjà citée, et le dispositif d'élimination des copeaux 4 est du type décrit dans la demande de certificat d'addition n° 2.428.513 déjà citée.

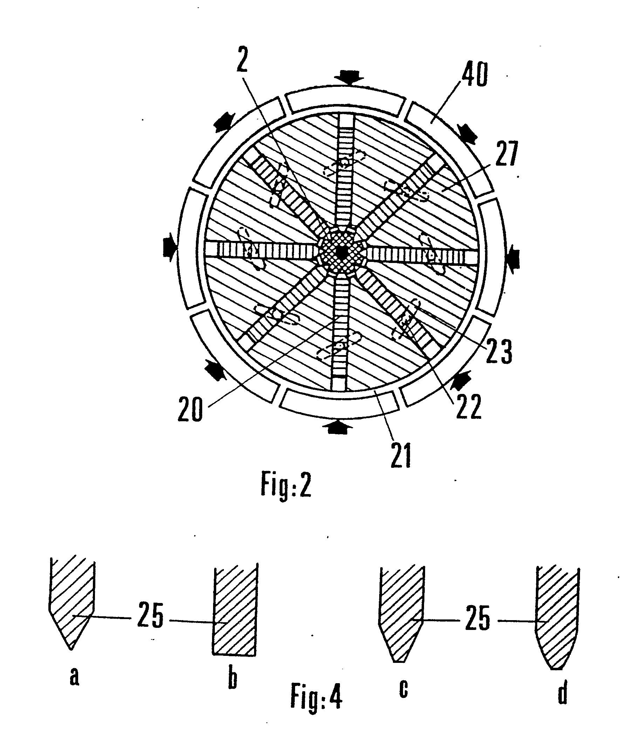

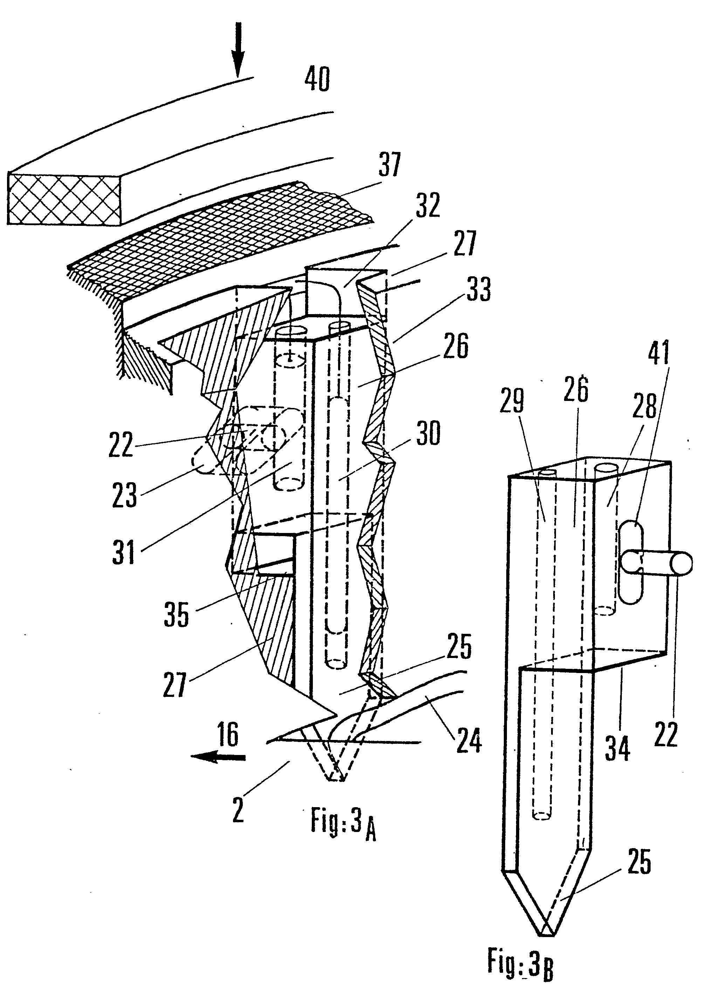

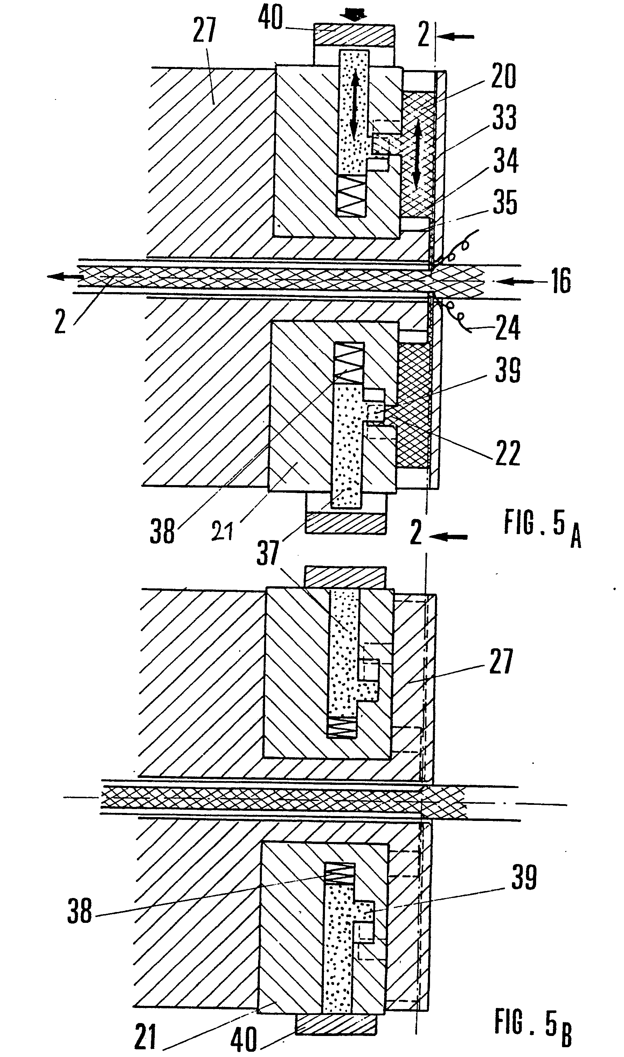

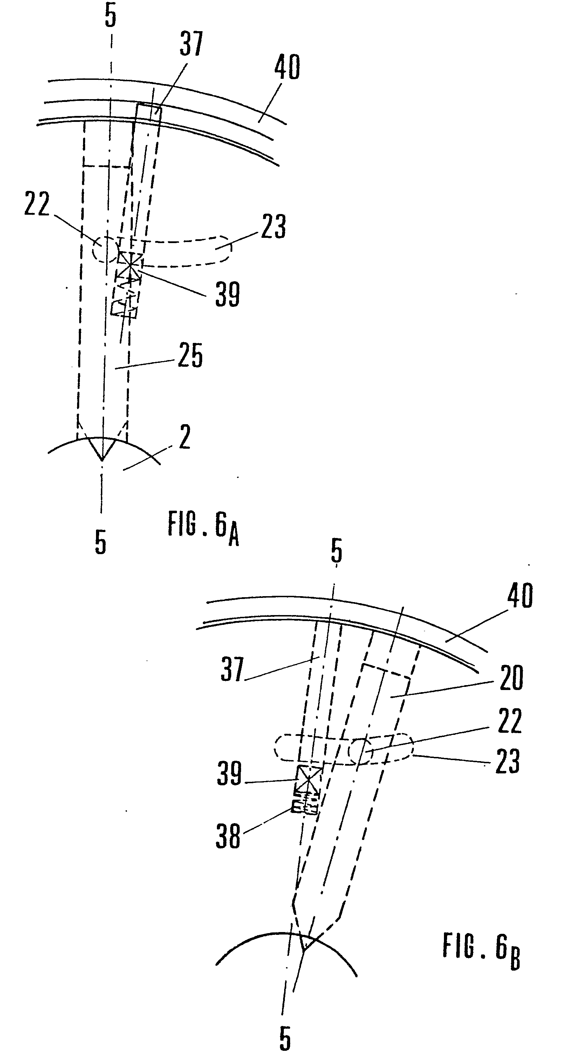

Le poste d'usinage 3 est représenté en détail sur les figures suivantes. La tête d'usinage 3, vue de face sur la figure 2, est constituée d'un ensemble de dents 20 disposées régulièrement suivant les rayons d'une circonférence dont le centre est occupé par le support 2 dans des logements d'une monture annulaire 27 dont la face aval a été éliminée sur la figure 2 (cf. axe 2-2, fig. 5a). Chaque dent 20 porte un ergot axial 22 pénétrant dans une fente 23 incurvée par rapport à l'axe de la dent, et pratiquée dans une couronne 21. Une bague de commande 40 a pour effet de bloquer l'ergot 22 à l'une ou l'autre des extrémités de la fente 23, suivant sa propre position ainsi qu'il sera expliqué plus loin. Un dispositif de verrouillage visible sur les figures 5 et 6 coopérant avec chaque dent est porté par la couronne 21, mobile en rotation par rapport à la monture 27, ainsi qu'il sera expliqué plus en détail en référence aux figures 5.

La figure 3$_A$ représente une vue en perspective d'une dent montée dans la tête d'usinage et la figure 3$_B$ une vue de la dent isolée après retournement de 180° autour d'un axe vertical. Ainsi qu'il apparaît, la dent comporte un corps massif 26 terminé par une pointe tranchante amincie 25 dont l'extrémité pénètre dans le support 2 défilant dans le sens de la flèche 16. Le corps massif 26 supporte l'ergot 22 pénétrant dans la fente inclinée 23. Le corps de la dent présente deux alésages respectivement 28 et 29 (fig. 3$_B$) dont l'un se prolonge dans la pointe 25. Ces alésages servent de logement respectivement à une résistance chauffante 30 et à un capteur de température 31 permettant de porter la dent à la température désirée et de la maintenir à cette température, ainsi qu'il est bien connu.

Ainsi qu'il apparaît sur la figure 3$_A$, la dent se trouve engagée dans un logement 32 constitué par un créneau dans la monture annulaire 27 dont le fond 33 a été coupé pour permettre une représentation plus claire de la dent. Pour la même raison, la représentation de la vue de face de la figure 2 est faite dans un plan perpendiculaire à l'axe de la pièce 2 à usiner situé en aval du fond 33 (dans la direction du défilement) ainsi qu'il est figuré par l'axe 2-2 de la figure 5. Le logement 32 reproduit la forme de la dent, la face inférieure 34 (figure 3$_B$) du corps massif 26 se trouve en regard d'un épaulement 35 de la monture 27 jouant le rôle de butée ainsi qu'il apparaît sur la figure 5$_B$. Le logement 32 se prolonge radialement par une partie rétrécie servant au guidage de la pointe 25 qui se trouve maintenue entre la face interne 33 et la face prolongeant l'épaulement 35. Le seul déplacement possible de la pointe 25, au jeu près, est un déplacement radial (vertical sur la figure 3$_A$). La couronne 21, coaxiale à la monture 27, entoure la partie visible de 27. Ainsi qu'il apparaît sur les figures 5, la couronne 21 occupe une gorge usinée dans la monture 27. Elle est mobile en rotation par rapport à la monture 27 et porte le dispositif de verrouillage des dents 20 (représenté en 37-39 sur les figures 5), non représenté sur la figure 3. Le verrouillage est assuré par une gâchette 37 qui immobilise l'ergot 22 dans la fente 23. La bague de commande 40 agit sur le dispositif de verrouillage et sur la position angulaire de la couronne 21.

Ainsi qu'il apparaît sur la figure 3$_B$, l'ergot 22 est rapporté sur le corps massif 26 au fond d'une gorge 41. Le réglage de la position de l'ergot 22 dans la gorge a lieu lors de la fabrication de la dent et est définitif. La position de l'ergot permet de régler la profondeur de pénétration de la pointe 25 de chaque dent dans le support 2 à usiner. Le réglage de la fixation des ergots est réalisé avant mise en route de la ligne à l'aide d'un modèle usiné au profil recherché remplaçant le support 2.

La figure 4 représente d'une façon schématique des vues en coupe de variantes des pointes 25 des dents. La figure 4a représente la variante figurant sur la figure 3 dans laquelle la pointe 25 est triangulaire. La figure 4b représente une dent à profil rectangulaire permettant de creuser des rainures de plus grande dimension que la variante précédente. Elle est utilisée pour les fibres de diamètre élevé. La figure 4c représente une dent dont l'extrémité est tronquée. La figure 4d, correspondant à la variante préférée lorsque le support est constitué en polyéthylène de moyenne densité, porte une pointe en forme de triangle curviligne tronqué. Ce profil élimine les risques de blocage de la fibre au fond de la rainure et facilite l'usinage en diminuant l'effort de coupe.

De tels profils sont faciles à obtenir par usinage conventionnel.

Les figures 5$_A$ et 5$_B$ représentent, vue en coupe, suivant un diamètre, la tête d'usinage respectivement en position de travail et de repos.

Les figures 6$_A$ et 6$_B$ sont des schémas de certains éléments de la tête, vus en élévation, respectivement dans les mêmes conditions. Les traces du plan de coupe de la figure 5 sont représentées par l'axe 5-5, sur les figures 6.

On reconnaît sur les figures 5$_A$ et 5$_B$ la monture annulaire 27, le support à usiner 2, la dent 20 guidée par le fond 33 du logement de 27 dans lequel elle s'insère, le copeau 24 découpé par la pointe de la dent 20 dans le support 2. En position de travail, le dispositif de verrouillage bloque l'ergot 22 à l'extrémité inférieure de la fente 23 (figure 6$_A$). Ce dispositif de verrouillage comporte une gâchette 37 pouvant se déplacer radialement dans une gorge creusée dans la couronne 21, ainsi qu'il est représenté par la flèche, sous l'action d'une force centrifuge exercée par un ressort 38 occupant le fond de la gorge et de la pression exercée par la bague de commande 40. La gâchette 37 porte un doigt 39 qui, pénétrant dans la fente 23, appuie sur l'ergot 22 et bloque l'ergot à l'extrémité inférieure de la fente. Sous l'action de la bague 40 provoquant l'arrêt (fig. 5$_B$) la gâchette 37 est enfoncée dans son logement, écrasant le ressort 38 et la bague 40 immobilise la couronne 21. La monture 27 continue sa rotation et l'ergot 22 suit la fente 23. L'inclinaison de celle-ci fait remonter radialement la dent 20 et écarte sa pointe 25 de la rainure du support 2. Une fois les dents écartées, l'ensemble d'usinage 3-4 est déplacé vers l'amont par le moteur 17 (fig. 1).

A la mise en route, la monture 27 est entraînée en rotation en sens inverse de la rotation au moment de l'arrêt. L'ergot 22, suivant la fente 23, provoque le déplacement radial de la dent vers l'axe jusqu'à sa position de travail. Le déplacement de la bague de commande 40 libère la gâchette 37 qui, sous l'action du ressort 38, reprend sa position de travail. Le doigt 39 bloque l'ergot 22 dans la fente 23. La tête d'usinage se trouve en état de fonctionnement. Le moteur 17 ramène la tête à sa position de travail et la rotation de la monture 27 s'inverse. Il se produit un auto-centrage. L'entraînement du support reprend alors.

Il est bien évident que la réalisation qui vient d'être décrite donnée à titre illustratif est simplifiée et que des équivalents mécaniques peuvent être substitués aux éléments décrits.

**Revendications**

1. Poste d'usinage en continu de rainures dans un support de câble à fibres optiques, comportant un ensemble de dents (20) en nombre égal à celui des rainures à usiner, caractérisé en ce que chaque dent comporte un corps massif (26) muni d'un ergot (22) et d'une pointe mince tranchante (25), et en ce que le poste comporte :

— une monture annulaire (27) présentant un ensemble de logements (32) radiaux identiques, en nombre égal à celui des dents débouchant aux deux extrémités, comportant chacun une première partie centrale servant de guide à la pointe (25) de la dent qu'il abrite et une seconde partie externe de la largeur du corps massif (26) de la dent, séparées l'une de l'autre par un épaulement (35) ;

— une couronne (21) occupant une gorge dans la monture (27), mobile par rapport à ladite monture et présentant un ensemble de fentes (23) incurvées et en nombre égal à celui des dents, chaque fente recevant l'ergot de la dent placée dans le logement correspondant de la monture (27), ladite couronne comportant de plus des logements en nombre égal à celui des dents et recevant chacun une gâchette (37) coopérant avec l'ergot (22) de la dent correspondante par l'intermédiaire d'un doigt (39) pouvant pénétrer dans les fentes de ladite couronne (21) ;

— une bague de commande (40) permettant d'agir sur les gachettes (37) et la couronne (21) ;

— des moyens (15, 17) pour translater la monture (27) parallèlement à la direction de défilement du support ;

— des moyens (30) pour chauffer chaque dent (20) ; et

— des moyens (31) pour contrôler la température de chaque dent.

2. Poste d'usinage selon la revendication 1, caractérisé en ce que la pointe tranchante (25) de chaque dent est un triangle curviligne tronqué.

3. Poste d'usinage selon l'une des revendications 1 et 2, caractérisé en ce que les moyens de chauffage et de contrôle de la température sont constitués respectivement par une résistance chauffante (30) et par un capteur de température (31) disposés respectivement dans deux alésages (28, 29) pratiqués dans chaque dent.

4. Utilisation d'un poste d'usinage selon l'une des revendications précédentes, dans une ligne de fabrication en continu d'éléments de câble à fibres optiques comportant un support cylindrique diélectrique dans lequel sont usinées des rainures servant de logement aux fibres optiques qui y sont maintenues par un rubanage, caractérisée en ce que la ligne de fabrication comporte les éléments suivants :

— un départ (1) fournissant un support cylindrique lisse ;

— un poste tournant (4) d'élimination des copeaux ;

— un poste tournant de poses simultanées (7, 8) des fibres optiques dans les rainures du support, comportant un équipage mobile annulaire traversé par le support, ledit équipage étant muni d'un ensemble de guides capillaires parcourus par les fibres, et avec l'une des extrémités de chaque guide reposant sur le fond d'une des rainures ;

— un poste de rubanage (11) ;

— un poste de tirage (12) ; et

— une réception (13) ;

en ce que le poste d'usinage (3) est monté de façon tournante, et en ce que la ligne de fabrication comporte également des moyens (14) pour synchroniser en rotation le poste de pose à partir du poste d'usinage.

5. Utilisation d'un poste d'usinage selon l'une des revendications 1 à 3, dans une ligne de fabrication en continu d'éléments de câble à fibre optiques comportant un support cylindrique diélectrique dans lequel sont usinées des rainures servant de logement aux fibres optiques qui y sont maintenues par un rubanage, caractérisée en ce que la ligne de fabrication comporte les éléments suivants :

— un départ tournant (1) fournissant un support cylindrique lisse ;

— un poste (4) d'élimination des copeaux ;

— un poste de pose simultanée (7, 8) des fibres optiques dans les rainures du support, comportant un équipage mobile annulaire traversé par le support, ledit équipage étant muni d'un ensemble de guides capillaires parcourus par les fibres, et avec l'une des extrémités de chaque guide reposant sur le fond d'une des rainures ;

— un poste de rubanage (11) ;

— un poste de tirage tournant (12) ; et

— une réception tournante (13).

**Claims**

1. Apparatus for continuously manufacturing grooves in a carrier of a fibre optic cable, comprising a group of teeth (20) the number of which equals the number of the grooves to be manufactured, characterized in that each tooth has a solid body (26) provided with a projection (22) and with a thin cutting point (25) and that the apparatus includes the following :

— an annular mounting (27) having a group of radial identical recesses (32), the number of which equals the number of the teeth, said recesses being open at their ends and having a first, central part serving as a guide for the point (25) of the tooth mounted therein and further having a second, external part of a width equal to width of said solid body (26) of the tooth, wherein these two parts are separated by means of a shoulder (35),

— a collar (21) seated in a groove in said mounting (27), said collar being movable relative to said mounting and including a group of slots (23), the number of which equals the number of said teeth, each slot receiving the projection of the tooth placed in the corresponding recess, said collar further including recesses the number of which equals the number of the teeth, which recesses in said collar receive a trigger (37) cooperating with the projection (22) of the corresponding tooth by means of a finger (39) which can penetrate into the slots of said collar (21),

— a control ring (40) which allows for acting upon the triggers (37) and upon said collar (21),

— means (15, 17) for displacing the mounting (27) in a direction parallel to the passing direction of said carrier,

— means (30) for heating each tooth (20) and

— means (31) for verifying the temperature of each tooth.

2. Apparatus according to claim 1, characterized in that the cutting point (25) of each tooth has the shape of a truncated curved line triangle.

3. Apparatus according to claim 1 or 2, characterized in that the means for heating and verifying the temperature are formed by a heating resistor (30) and a temperature sensor (31), respectively, provided in two bores (28, 29) in each tooth.

4. Use of an apparatus according to any one of the preceding claims in an assembly line for continuously manufacturing components of fibre optic cables having a cylindrical dielectric carrier provided with grooves for receiving optical fibres which are held therein by a wrapping, characterized in that the assembly line includes the following units :

— a starting unit (1) delivering a cylindrical smooth carrier,

— a rotating unit (4) for removing chips,

— a rotating unit (7, 8) for simultaneously inserting optical fibres into the grooves of the carrier, said unit including a movable annular equipment penetrated by said carrier, said equipment being provided with a group of tubular guides through which the optical fibres pass, an end of each of these guides resting on the bottom of one of said grooves,

— a wrapping unit (11),

— a pulling unit (12) and

— a receiving unit (13),

that the apparatus (3) for manufacturing the grooves is mounted rotatably and that the assembly line is provided with means (14) for synchronizing the rotation of the rotating unit for simultaneously inserting the optical fibres with the rotation of the apparatus for manufacturing grooves.

5. Use of the apparatus according to any one of claims 1 to 3 in an assembly line for continuously manufacturing components of fibre optic cables having a cylindrical dielectric carrier provided with grooves for receiving optical fibres which are held therein by a wrapping, characterized in that the assembly line includes the following units :

— a rotating starting unit (1) delivering a cylindrical smooth carrier,

— a unit (4) for removing chips,

— a unit (7, 8) for simultaneously inserting optical fibres into the grooves of the carrier, said unit including a movable annular equipment penetrated by said carrier, said equipment being provided with a group of tubular guides through which the optical fibres pass, an end of each of these guides resting on the bottom of one of said grooves,

— a wrapping unit (11),

— a rotating pulling unit (12) and

— a rotating receiving unit (13).

**Ansprüche**

1. Vorrichtung zum kontinuierlichen Herstellen von Rillen in einem Lichtleitfaserkabel-Träger, mit einer Gruppe von Zähnen (20), deren Anzahl gleich der Anzahl der herzustellenden Rillen ist, dadurch gekennzeichnet, daß jeder Zahn einen massiven Körper (26) aufweist, der mit einem Vorsprung (22) und mit einer dünnen Schneidspitze (25) versehen ist, und daß die Vorrichtung folgendes enthält :

— eine ringförmige Halterung (27) mit einer Gruppe von radialen, gleichen Ausnehmungen (32), deren Anzahl gleich der Anzahl der Zähne ist und die an ihren Enden offen sind und jeweils einen ersten, mittleren Teil aufweisen, der als Führung für die Spitze (25) des in ihr untergebrachten Zahns dient, sowie einen zweiten, äußeren Teil aufweisen, dessen Breite gleich der Breite des massiven Körpers (26) des Zahns ist, wobei diese beiden Teile durch eine Schulter (35) voneinander getrennt sind,

— einen in einer Nut in der Halterung (27) sitzenden Kranz (21, der bezüglich der Halterung beweglich ist und eine Gruppe von gekrümmten Schlitzen (23) aufweist, deren Anzahl gleich der Anzahl der Zähne ist, wobei jeder Schlitz den Vorsprung des in der entsprechenden Ausnehmung der Halterung (27) angebrachten Zahns aufnimmt und wobei der Kranz außerdem mit Ausnehmungen versehen ist, deren Anzahl gleich der Anzahl der Zähne ist und die jeweils einen Drücker (37) aufnehmen, der mit dem Vorsprung (22) des entsprechenden Zahns mittels eines Fingers (39) zusammenwirkt, der in die Schlitze des Rings (21) eindringen kann,

— einen Steuerring (40), der eine Einwirkung auf die Drücker (37) und auf den Kranz (21) gestattet.

— Mittel (15, 17) zum Verschieben der Halterung (27) parallel zur Richtung der Vorbeibewegung des Trägers,

— Mittel (30) zum Erwärmen jedes Zahns (20) und

— Mittel (31) zum Kontrollieren der Temperatur jedes Zahns.

2. Vorrichtung nach Anspruch 1, dadurch gekennzeichnet, daß die Schneidspitze (25) jedes Zahns die Form eines krummlinigen abgeschnittenen Dreiecks hat.

3. Vorrichtung nach Anspruch 1 oder 2, dadurch gekennzeichnet, daß die Mittel zum Erwärmen und zum Kontrollieren der Temperatur von einem Heizwiderstand (30) bzw. von einem Wärmefühler (31) gebildet sind, die in zwei Bohrungen (28, 29) in jedem Zahn untergebracht sind.

4. Anwendung einer Vorrichtung nach einem der vorhergehenden Ansprüche in einem Fertigungsband zum kontinuierlichen Herstellen von Bauteilen für Lichtleitfaserkabel mit einem zylindrischen, dielektrischen Träger, in dem Rillen angebracht werden, die der Aufnahme von Lichtleitfasern dienen, die darin durch eine Umwickelung gehalten werden, dadurch gekennzeichnet, daß das Fertigungsband folgende Einheiten enthält :

— eine Starteinheit (1), die einen zylindrischen, glatten Träger liefert,

— eine Dreheinheit (4) zum Entfernen von Spänen,

— eine Dreheinheit (7, 8) zum gleichzeitigen Einlegen von Lichtleitfasern in die Rillen des Trägers mit einer beweglichen, ringförmigen, vom Träger durchdrungenen Einrichtung, die mit einer Gruppe von rohrförmigen Führungen, durch die die Lichtleitfasern laufen, versehen ist, wobei ein Ende jeder dieser Führungen auf dem Boden einer der Rillen aufliegt,

— eine Umwickelungseinheit (11),

— eine Zugeinheit (12) und

— eine Empfangseinheit (13),

daß die Rillenherstellungsvorrichtung (3) drehbar angebracht ist und daß das Fertigungsband mit Mitteln (14) zum Synchronisieren der Drehung der Dreheinheit zum gleichzeitigen Anbringen der Lichtleitfasern mit der Drehung der Rillenherstellungsvorrichtung versehen ist.

5. Anwendung einer Vorrichtung gemäß einem der Ansprüche 1 bis 3 in einem Fertigungsband zum kontinuierlichen Herstellen von Bauteilen für Lichtleitfaserkabel mit einem zylindrischen, dielektrischen Träger, in dem Rillen angebracht werden, die der Aufnahme von Lichtleitfasern dienen, die darin durch eine Umwickelung gehalten werden, dadurch gekennzeichnet, daß das Fertigungsband folgende Einheiten enthält :

— eine umlaufende Starteinheit (1), die einen zylindrischen, glatten Träger liefert,
— eine Einheit (4) zum Entfernen von Spänen,
— eine Dreheinheit (7, 8) zum gleichzeitigen Einlegen von Lichtleitfasern in die Rillen des Trägers mit einer beweglichen, ringförmigen, vom Träger durchdrungenen Einrichtung, die mit einer Gruppe von rohrförmigen Führungen, durch die die Lichtleitfasern laufen, versehen ist, wobei ein Ende jeder dieser Führungen auf dem Boden einer der Rillen aufliegt,
— eine Umwickelungseinheit (11),
— eine umlaufende Zugeinheit (12) und
— eine umlaufende Empfangseinheit (13).

Fig:1

0 019 500

Fig:2

Fig:4

a      25      b      c      25      d

Fig:3A

Fig:3B

0 019 500

FIG. 5 A

FIG. 5 B

FIG. 6A

FIG. 6B